# EUROPÄISCHE PATENTSCHRIFT

(11) **EP 3 509 535 B1**
(45) Veröffentlichungstag und Bekanntmachung des Hinweises auf die Patenterteilung: **28.04.2021**
(21) Anmeldenummer: 17712114.2
(22) Anmeldetag: 20.03.2017
(51) Int. Cl.: A61C 8/00

(54) **ZAHNERSATZSYSTEM**
DENTAL PROSTHESIS SYSTEM
SYSTÈME DE PROTHÈSE DENTAIRE

(30) Priorität: 08.09.2016 CH 11702016
(43) Veröffentlichungstag der Anmeldung: 17.07.2019
(73) Patentinhaber: Dentalpoint AG, 8048 Zürich (CH)
(72) Erfinder: BOLLETER, Philip, 8952 Schlieren (CH); WETTSTEIN, Pascal, 5726 Unterkulm (CH)
(74) Vertreter: Rentsch Partner AG
(86) Internationale Anmeldenummer: PCT/EP2017/056542
(87) Internationale Veröffentlichungsnummer: WO 2018/046148

(56) Entgegenhaltungen:
- EP-A1- 2 143 398
- WO-A1-2016/198385
- WO-A2-2014/091346
- US-A1- 2014 272 791

## Beschreibung

### TECHNISCHES GEBIET

Die Erfindung betrifft ein Zahnersatzsystem.

### STAND DER TECHNIK

In der dentalen Implantologie werden nach wie vor hauptsächlich Systeme aus Titan verwendet. Diese bestehen in der Regel aus einem Implantat, welches im Knochen verankert wird, einem Abutment zur Aufnahme der Zahnkrone und einer Verbindungsschraube, wobei alle drei Elemente aus Titan oder einer geeigneten Titanlegierung hergestellt sind. Das Abutment weist eine Durchgangsbohrung auf, welche dazu eingerichtet ist, die Verbindungsschraube aufzunehmen um das Abutment im Implantat durch die Verschraubung zu fixieren. Das Abutment umfasst in der Regel einen Abutmentkopf und einen Abutmentstamm. Kopf und Stamm werden von der Durchgangsbohrung durchdrungen.

Das Implantat, weist an seinem distalen Ende eine Öffnung, beispielsweise in Form einer Sacklochbohrung, auf, welche den Abutmentstamm und die Verbindungschraube aufnimmt. In der Regel ist in dieser Öffnung ein Innengewinde angeordnet. Bei der Fixierung des Abutments im Implantat wird zunächst das Abutment im Implantat positioniert, die Verbindungsschraube durch die Durchgangsbohrung eingeführt und festgeschraubt. Es ist bekannt zur Positionierung des Abutments im Implantat am Abutmentstamm eine Rotationssicherung vorzusehen, beispielsweise den Abutmentstamm an seiner äusseren Umlauffläche als Mehrkant auszubilden, der in einen korrespondierenden Innenmehrkant in der Implantatöffnung eingreift. Das Abutment bzw. der Abutmentstamm wird auf dieses Weise rotationsstabil im Implantat positioniert und im Anschluss mit der Verbindungsschraube fixiert.

Diese Verbindung von Abutment mit dem Implantat hat sich bei Zahnersatzsystemen, bei welchen alle Teile aus Titan bzw. Titanlegierungen gefertigt sind bewährt. Durch das duktile Verhalten und die plastische Verformbarkeit des Titans bzw. der Titanlegierungen wird die Aufnahme von Biegebelastungen, welche beim Kauen auf die Zahnkrone und das darunterliegende Abutment wirken, ermöglicht. Durch dieses Materialverhalten ist zumindest Teilweise eine Dichtwirkung, insbesondere zwischen Abutment und Implantat sichergestellt. Dies gilt insbesondere für die auftretenden Zugkräfte und Kompressionskräfte. Bei aus dem Stand der Technik bekannten Zahnersatzsystemen weist der Abutmentstamm eine gewisse Länge auf, sodass dieser relativ weit in die Aufnahmeöffnung des Implantats hineinragt. Das Abutment wird so gegen Kippen gesichert. Eine Übertragung dieser Verbindung von Zahnersatzsystemen aus Titan auf ein Abutment und ein Implantat aus Keramik hat sich als schwierig erwiesen. Wie vorgängig beschrieben ragen bei einem Titanzahnersatzsystem der Abutmentstamm und die Verbindungschraube in der Öffnung des Implantats. Die Wandstärke des Implantats, ist entsprechend reduziert, da die Öffnung im Implantat den Abutmentstamm zusammen mit der Schraube aufnehmen muss. Aufgrund der anatomischen Gegebenheiten des menschlichen Kiefers ist es wünschenswert, einen Implantatdurchmesser von 5 mm oder kleiner zu realisieren. Geringe Wandstärken spielen bei Titanimplantaten im Vergleich zu Keramikimplantaten für die Stabilität eine wesentlich kleinere Rolle. Bei Keramik führen zu geringe Wandstärken des Implantats und/oder des Abutments sehr leicht zum Bruch des Zahnersatzsystems. Darüber hinaus kann die Keramik, verglichen mit den Systemen aus Titan, die bei der Kaubelastung (Biegebelastung) resultierenden Zugkräfte nur stark eingeschränkt aufnehmen. Bei einem Zahnersatzsystem aus Keramik ist zudem die Dichtung zwischen Abutment und Implantat schwieriger zu realisieren, als bei Systemen aus Titan.

Die Verwendung von keramischen Werkstoffen anstelle von Metall ist bei Zahnersatzsystemen seit längerem bekannt. Ebenso das Verschrauben des Abutments mit dem Implantat. Stellvertretend für aus dem Stand der Technik bekannte Zahnersatzsysteme aus Keramik sei an dieser Stelle die WO2014/091346 angeführt.

### DARSTELLUNG DER ERFINDUNG

Es ist eine Aufgabe der Erfindung, ein Zahnersatzsystem zu schaffen, welches die Nachteile bekannter Lösungen mindestens teilweise vermeidet. Die Aufgabe wird durch die Patentansprüche gelöst.

Das erfindungsgemässe Zahnersatzsystem zeichnet sich insbesondere durch eine hohe Stabilität gegenüber Biegebelastungen aus, welche speziell beim Kauen auftreten können. Ebenso wird die Dichtung zwischen dem Implantat und dem Abutment, welche erfindungsgemäss aus Keramik gefertigt sind, verbessert.

Unter sogenannten "Bone level" Implantaten ist im Zusammenhang mit der vorliegenden Erfindung ein Zahnersatzsystem zu verstehen, welches ein Implantat aufweist, das im eingesetzten Zustand nicht oder nur in einem sehr geringen Mass über die Höhe des Knochenniveaus des Kieferknochens übersteht. Im Gegensatz dazu, steht das sogenannte "Tissue level" Implantat, welches an seinem distalen Ende einen umlaufenden Rand des sogenannten Implantathalses aufweist, welcher im eingesetzten Zustand immer über das Knochenniveau des Kieferknochens steht.

Ist im Folgenden von einem Implantat die Rede umfasst dies den im Kieferknochen verankerten Teil des Zahnersatzsystems. Das Abutment stellt einen zum Implantat separaten Teil dar. Das Abutment dient später zur Aufnahme der Zahnkrone. Es wird auf das Implantat aufgesetzt und mit einem Bolzen im Implantat befestigt.

Unter Übermasspassung oder auch Presssitz ist zu verstehen, dass das Grösstmass des Durchmessers der Aufnahmeöffnung des Implantats, zumindest in Teilbereichen, in jedem Fall kleiner ist als das Kleinstmass des Durchmessers des Bolzens. Die Übermasspassung umfasst ein Toleranzfeld von 0 bis 0.1 mm, bevorzugt 0.02 bis 0.05 mm.

Unter einem Passsitz oder auch Spielpassung ist zu verstehen, dass das Kleinstmass des Durchmessers der Aufnahmeöffnung des Implantats, zumindest in Teilbereichen, immer grösser ist, im Grenzfall gleich gross, als das Grösstmass des Durchmessers des Bolzens. Die Spielpassung respektive der Passsitz umfasst ein Toleranzfeld von 0 bis 0.1 mm, vorzugsweise 0.01 bis 0.05 mm.

Das erfindungsgemässe Zahnersatzsystem ist aus Keramik gefertigt und umfasst ein Implantat zur Osseointegration in einen Kieferknochen mit einer Aufnahmeöffnung und ein Abutment mit einer Durchgangsbohrung zur Aufnahme eines Bolzens. Der Bolzen ist aus einem faserverstärkten Thermoplast gefertigt und dazu eingerichtet, Abutment und Implantat zu verbinden. Ferner weist das erfindungsgemässe Zahnersatzsystem eine Rotationssicherung auf, wobei diese durch erste Formschlussmittel angeordnet an einem proximalen Ende des Abutment und zweite Formschlussmittel angeordnet an einem distalen Ende des Implantats gebildet wird. Das Zahnersatzsystem zeichnet sich dadurch aus, dass bei einem Eingreifen der ersten Formschlussmittel in die zweiten Formschlussmittel, die ersten und zweiten Formschlussmittel beabstandet voneinander angeordnet sind, sodass das Abutment relativ zum Implantat kippbar ist. Der eingesetzte Bolzen, verläuft in der Durchgangsbohrung des Abutments und der Aufnahmeöffnung. Zwischen dem Bolzen und der Aufnahmeöffnung des Implantats ist eine Übermasspassung vorgesehen.

In einer ersten Ausführungsform weisen das proximale Ende des Abutments und das distale Ende des Implantats je eine Auflagefläche auf. Die ersten und zweiten Formschlussmittel sind an den Auflageflächen angeordnet. Beim Eingreifen der ersten Formschlussmittel in die zweiten Formschlussmittel berühren die Auflageflächen einander.

In einer Ausführungsform sind die beiden Auflageflächen flachkonisch, in einem gleichen Winkel geneigt ausgebildet.

In einer weiteren Ausführungsform sind die beiden Auflageflächen im Berührungsbereich abgerundet ausgestaltet, wobei der Rundungsradius der beiden Auflageflächen den gleichen Wert aufweist.

In einer Ausführungsform weist der Bolzen wenigsten einen ersten und einen in proximaler Richtung gesehen an den ersten Zylinderabschnitt anschliessenden zweiten Zylinderabschnitt auf, wobei der Durchmesser des ersten Zylinderabschnitts grösser ist als der Durchmesser der Aufnahmeöffnung des Implantats, sodass zwischen dem ersten Zylinderabschnitt und der Aufnahmeöffnung des Implantats ein Presssitz resultiert.

In einer bevorzugten Ausführungsform ist am Übergang zwischen dem ersten und dem zweiten Zylinderabschnitt eine umlaufende Schulter vorgesehen, welche auf einem in der Aufnahmeöffnung des Implantats angeordneten umlaufenden Vorsprung aufliegt, wobei der Presssitz zwischen der Schulter und dem umlaufenden Vorsprung resultiert.

In einer Ausführungsform weist der zweite Zylinderabschnitt an seiner Mantelfläche ein Aussengewinde auf, welches mit einem in der Aufnahmeöffnung angeordneten Innengewinde korrespondiert, wobei der Kerndurchmesser des Aussengewindes kleiner oder gleich gross ist als der Kerndurchmesser des Innengewindes.

In einer Ausführungsform schliesst an den zweiten Zylinderabschnitt ein weiterer, dritter Zylinderabschnitt an, wobei der Durchmesser des dritten Zylinderabschnitts kleiner oder gleich gross ist als der Durchmesser der Aufnahmeöffnung des Implantats.

In einer Ausführungsform umfassen die ersten Formschlussmittel eine Mehrzahl von Zapfen, welche an der Auflagefläche des Abutments vorspringen und mit den zweiten Formschlussmitteln einer Mehrzahl an Nuten angeordnet an der Auflagefläche des Implantats korrespondieren.

In einer weiteren Ausführungsform umfassen die ersten Formschlussmittel eine Mehrzahl von Nuten, welche an der Auflagefläche des Abutments angeordnet sind und mit den zweiten Formschlussmitteln, einer Mehrzahl von Zapfen welche an der Auflagefläche des Implantats vorspringen, korrespondieren.

In einer Ausführungsform weisen die Zapfen längsseitige und breitseitige Zapfenwände, vorzugsweise eine längsseitige Zapfenwand und zwei breitseitige Zapfenwände und die Nuten breitseitige und längsseitige Nutenwände, vorzugsweise eine längsseitige und zwei breitseitige Nutenwände auf. Beim Eingreifen der ersten Formschlussmittel in die zweiten Formschlussmittel sind die längsseitigen Zapfenwand und die längsseitigen Nutenwand beabstandet voneinander angeordnet, wobei dieser Abstand grösser ist als der Abstand zwischen den breitseitigen Zapfenwänden und den breitseitigen Nutenwänden, sodass das Abutment im Implantat rotationsstabil positionierbar und relativ zum Implantat kippbar ist.

In einer Ausführungsform sind die Anzahl der Zapfen kleiner ist als die Anzahl der Nuten, vorzugsweise zwei Zapfen mit vier Nuten, oder zwei Zapfen mit sechs Nuten oder drei Zapfen mit sechs Nuten, eine formschlüssige Verbindung bilden.

In einer Ausführungsform handelt es sich beim faserverstärktem Thermoplast um einen Thermoplasten Verstärkungsfasern, ausgewählt aus einer Gruppe bestehend aus: Kohlefaser, Aramidfaser, Glasfaser, Carbon Nano Tubes oder Kombinationen daraus.

In einer Ausführungsformbesteht der faserverstärkte Thermoplast aus unidirektionalen Kohlefasern in einer PEEK-Matrix.

Durch den Einsatz des Bolzens kann beim erfindungsgemässen Zahnersatzsystem auf ein Abutment mit einem Abutmentstamm, beispielsweise ausgebildet als rohrförmiger Hohlkörper, verzichtet werden. Die Innenbohrung im Implantat, welche den Bolzen aufnimmt, kann mit einem geringeren Durchmesser ausgeführt werden und die resultierende Wandstärke des Implantats ist entsprechend stärker. Um das Abutment im Implantat vor der Befestigung mit dem Bolzen rotationsstabil positionieren zu können, weist das Abutment an seinem proximalen Ende erste Formschlussmittel auf, welche mit den zweiten Formschlussmitteln, angeordnet amdistalen Ende des Implantats, zusammenwirken. Das Zusammenwirken der Formschlussmittel ist so ausgestaltet, dass das Abutment im Implantat rotationsstabil befestigbar ist.

Um die Rotationstabilität zu erzielen bilden Teile der ersten und der zweiten Formschlussmittel eine passgenaue formschlüssige Verbindung und weitere Teile der ersten und zweiten Formschlussmittel sind in einem gewissen Abstand zueinander angeordnet,. Zwischen den beiden Formschlussmitteln liegt ein Spiel vor, d.h. ist das Abutment auf das Implantat aufgesetzt, sind die ersten Formschlussmittel in einem gewissen Abstand dem zweiten Formschlussmittel angeordnet und das Abutment ist relativ zum Implantat frei kippbar. Dieser Abstand oder dieses Spiel bleibt auch erhalten, wenn der Bolzen eingesetzt und das Zahnersatzsystem fix im Kiefer des Patienten montiert ist. Dadurch wird bewirkt, dass bei eingesetztem Bolzen die Biegebelastung (z.B. durch Kauen) zuverlässig über den Bolzen aufgenommen werden kann und kein Verkanten der Formschlussmittel möglich ist. Ein brechen der aus Keramik gefertigten Formschlussmittel wird verhindert.

Die eigentliche Befestigung und Ausrichtung des Abutments im Implantat erfolgt mit Hilfe des Bolzens. Beim Vorspannen des Bolzens wird das proximale Ende des Abutments gegen das distale Ende des Implantats gedrückt. Abutment und Implantat sind aus einem keramischen Werkstoff ausgebildet, beispielsweise Yttrium-, oder Aluminiumoxid stabilisiertes Zirkonoxid. Das Implantat und das Abutment nehmen die entstehenden Drucckräfte auf. Erfindungsgemäss, steht hierfür die Auflagefläche des proximalen Endes des Abutments und des distalen Endes des Implantats zur Verfügung. Bedingt durch die Durchgangsbohrung des Abutments und die Aufnahmeöffnung des Implantats handelt es sich um je eine ringförmige Auflagefläche. Die bei einer Biegebelastung (z.B. durch Kauen) resultierenden Zugkräfte werden durch den Bolzen und nicht durch Implantat und Abutment absorbiert. Der Bolzen ist aufgrund seiner Fertigung aus einem faserverstärktem Thermoplast elastisch verformbar und daher für die Absorption dieser Kräfte vorteilhaft. Das Keramikimplantat und das Keramikabutment werden daher nur auf Druck und nicht auf Zug beansprucht. Mit der erfindungsgemässen Anordnung gelingt es die Zugkräfte, welche von einem keramischen Werkstoff nur ungenügend aufgenommen werden können und die Bruchneigung erheblich steigern, über den Bolzen abzuführen. Der Bolzen ist aus einem weichen zugfesten Material, beispielsweise einem faserverstärkten Thermoplasten, hergestellt. Die Fertigung aus einem solchen Material bietet die Möglichkeit dem Bolzen, oder zumindest Teile des Bolzens, im Übermass zu fertigen, sodass zwischen der Aufnahmeöffnung des Implantats und dem Bolzen eine Übermasspassung vorliegt.

Durch die Übermasspassung resultiert in Teilbereichen zwischen dem Bolzen und der Aufnahmeöffnung des Implantats ein Presssitz. Dieser Presssitz ermöglicht, Hohlräume welche in weiteren Teilbereichen in den keine Presssitz gegeben ist vorliegen, abzudichten. Durch diese Abdichtung wird verhindert, dass sich im Inneren des Implantats beispielsweise Bakterien ansammeln können.

Weitere Vorteile des Bolzens aus faserverstärkten Thermoplasten sind seine dämpfenden Eigenschaften und seine Fähigkeit kurzfristige Überlastungsstösse aufnehmen und ableiten zu können. Vereinfacht gesagt wirkt der Bolzen im erfindungsgemässen Zahnersatzsystem als eine Art "Stossdämpfer". Dies ist vor allem wichtig wenn spröde Materialien wie z.B. Keramik für Implantat und Abutment zum Einsatz kommen, da diese aufgrund fehlender elastischer und plastischer Verformbarkeit keine dämpfenden Eigenschaften besitzen.

In einer weiteren Ausführungsform des erfindungsgemässen Zahnersatzsystems ist am Bolzen und/oder an einer Innenwand der Durchgangsbohrung des Abutments ein Stoppelement angeordnet. In einer Vormontageposition rastet der Bolzen temporär im Stoppelement ein.

Diese Vormontageposition wird dadurch erreicht, dass der Zahnarzt den Bolzen bis zum Einrasten im Stoppelement, in die Durchgangsbohrung des Abutments einführt. In dieser Position ragt der Bolzen in proximaler Richtung aus der Durchgangsbohrung des Abutments hervor. Dieser vorstehende Teil des Bolzens hilft zusätzlich zu den Formschlussmitteln, das Abutment im Implantat, welches bereits in den Kieferknochen des Patienten verankert ist, zu positionieren. Ein weiterer Vorteil besteht darin, dass bei Schräglage des Patienten das Abutment, vor dem endgültigen Festziehen im Implantat provisorisch fixiert wird.

Im Anschluss, zieht der Zahnarzt den Bolzen fest und fixiert das Abutment im Implantat. Beim Festziehen verlässt der Bolzen die Vormontageposition und erlangt seine Endposition. In dieser Endposition resultiert zwischen dem Bolzen und der Aufnahmeöffnung des Implantats ein Presssitz.

In einer Ausführungsform der Erfindung ist das Stoppelement als eine Verjüngung der Innenwand der Durchgangsbohrung ausgebildet und der Bolzen rastet in der Vormontageposition temporär, bis die endgültige Fixierung vorgenommen wird, in der Verjüngung ein.

In einer weiteren Ausführungsform ist das Stoppelement als eine in der Innenwand angeordnete Ausnehmung, vorzugsweise als eine in der Innenwand umlaufende Rille ausgebildet. Der Bolzen weist einen Vorsprung auf, welcher in der Vormontageposition temporär in die Ausnehmung einrastet.

In einer Ausführungsform der Erfindung ist die Vormontageposition dadurch gekennzeichnet, dass der erste Zylinderabschnitt des Bolzens über seine gesamte Länge in der Durchgangsbohrung des Abutments verläuft und der zweite Zylinderabschnitt aus der Durchgangsbohrung vorsteht. Erst beim endgültigen Fixieren wird der erste Zylinderabschnitt, welcher verglichen mit dem Durchmesser der Aufnahmeöffnung des Implantats im Übermassgefertigt ist, in die Aufnahmeöffnung des Implantats eingeführt, sodass der Presssitz resultiert.

### KURZE ERLÄUTERUNG ZU DEN FIGUREN

Die Erfindung soll nachfolgend anhand von Ausführungsbeispielen im Zusammenhang mit der Zeichnung näher erläutert werden. Es zeigen:

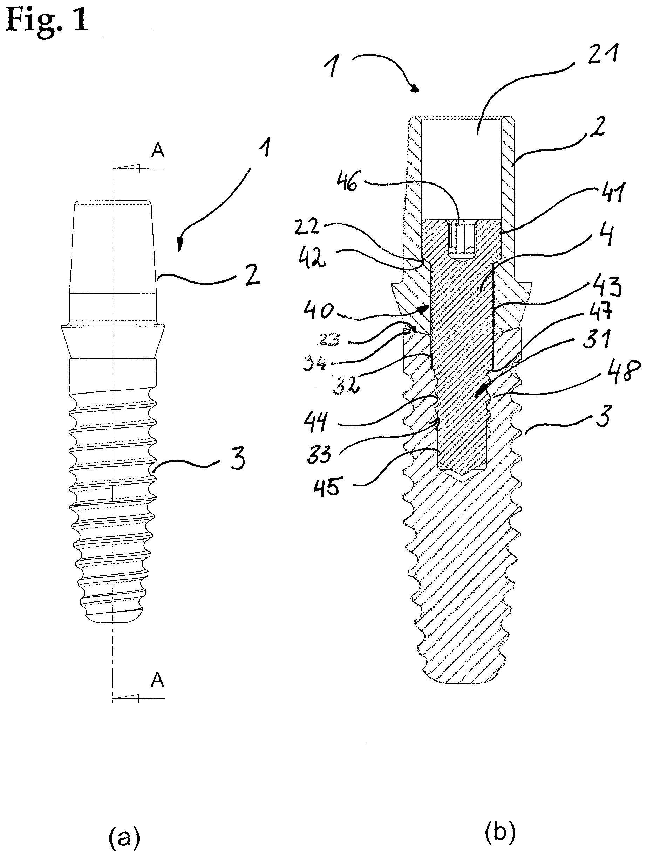

- Fig. 1: unter (a) eine erste Ausführungsform des erfindungsgemässen Zahnersatzsystems,
- Fig. 1: unter (b) die erste Ausführungsform aus Figur 1 (a) in einer Schnittdarstellung entlang der Achse A-A,
- Fig. 2: unter (a) eine weitere Ausführungsform eines Implantats mit Mittel zur Rotationssicherung für das erfindungsgemässe Zahnersatzsystem in einer perspektivischen Darstellung,

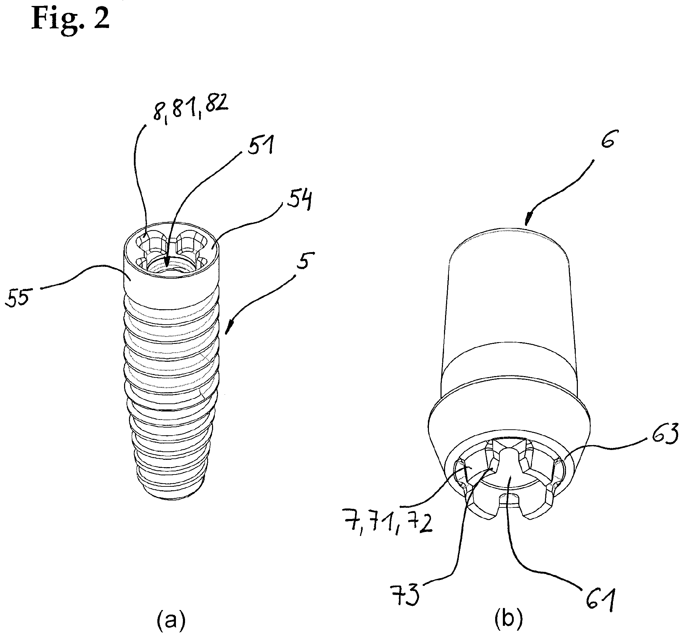

- Fig. 2: unter (b) eine weitere Ausführungsform eines Abutments mit Mittel zur Rotationssicherung in einer perspektivischen Darstellung, wobei das Abutment mit dem Implantat aus Figur 2(a) korrespondiert und eine Ausführungsform des erfindungsgemäss Zahnersatzsystems bildet.

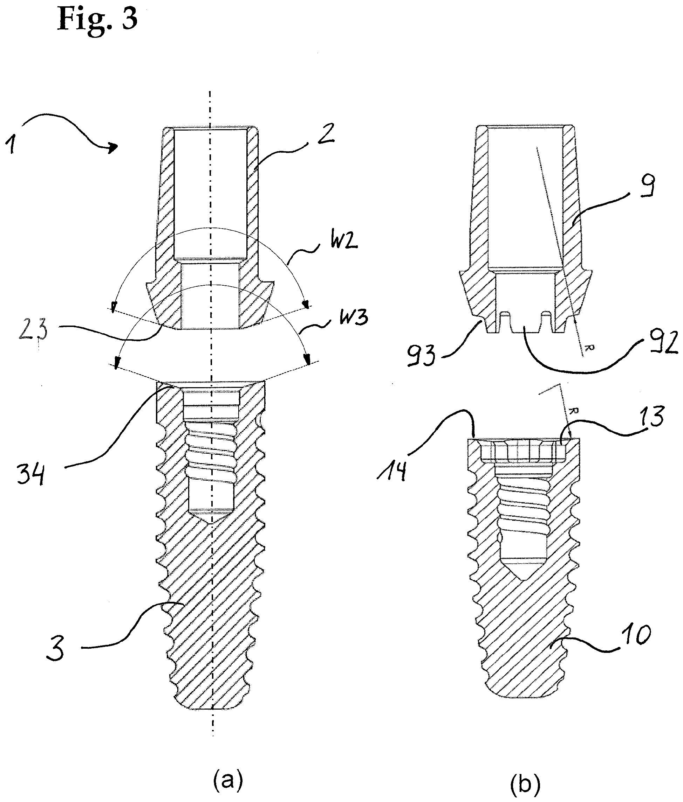

- Fig. 3: unter (a) eine beispielhafte Auflagefläche des Abutments bzw. des Implantats aus Fig. 1, wobei Abutment und Implantat in einer Schnittdarstellung gezeigt sind,
- Fig. 3: unter (b) eine weitere Ausführungsform einer Auflagefläche des Abutments bzw. des Implantats, wobei Abutment und Implantat in einer Schnittdarstellung gezeigt sind.

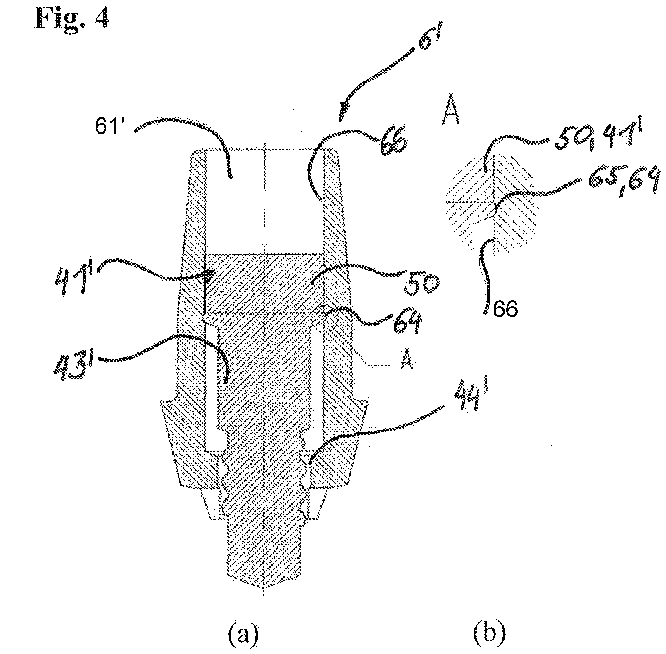

- Fig. 4: zeigt unter (a) eine weitere Ausführungsform eines Abutments mit einem Stoppelement, wobei das Abutment in einer Vormontageposition dargestellt ist und unter (b) einen Detailausschnitt des Bolzen und der Innenwand des Abutments.

### WEGE ZUR AUSFÜHRUNG DER ERFINDUNG

Figur 1 zeigt unter (a) eine erste Ausführungsform des erfindungsgemässen Zahnersatzsystems 1 umfassend ein Abutment 2 verbunden mit einem Implantat 3 in einer Seitenansicht. Das Abutment 2 und das Implantat 3 sind aus einem keramischen Werkstoff, vorzugsweise aus Aluminiumoxid-verstärktem Zirkonoxid oder Yttriumoxid-verstärktem Zirkonoxid gefertigt. Beim gezeigten Zahnersatzsystem handelt es sich um ein sogenanntes "Bone-Level" Design. Das Implantat 3 ist dabei so ausgestaltet, dass dieses wenn es in den Kieferknochen eingeschraubt ist nur in einem sehr geringen Mass oder gar nicht über die Höhe des Knochenniveaus übersteht.

Figur 1 zeigt unter (b) eine Schnittdarstellung entlang der Achse A-A der Ausführungsform aus Figur 1(a). Das Abutment 2 weist eine Durchgangsbohrung 21 auf und das Implantat 3 eine Aufnahmeöffnung 31. Die Durchgangsbohrung 21 und die Aufnahmeöffnung 31 sind dazu eingerichtet, den Bolzen 4 aufzunehmen und auf diese Weise das Abutment 2 mit dem Implantat 3 zu verbinden bzw. dieses zu fixieren. Der Bolzen 4 ist aus einem faserverstärkten Thermoplast gefertigt, beispielsweise unidirektionale Kohlefasern eingebettet in einer PEEK-Matrix. In der in Fig. 1(b) dargestellten Ausführungsform umfasst der Bolzen 4 einem Bolzenkopf 41 mit einer Ausnehmung 46 zur Aufnahme eines Einschraubwerkzeugs und einen an den Kopf 41 anschliessenden Stamm 40. Am Übergang zwischen Kopf 41 und Stamm 40 weist der Bolzen 4 eine erste umlaufende Schulter 42 auf, welche an einem in der Durchgangsbohrung 21 angeordneten Vorsprung 22 aufliegt. Der Stamm 40 umfasst in der vorliegenden Ausführungsform drei aneinander anschliessende Zylinderabschnitte 43, 44 und 45. Der erste Zylinderabschnitt 43 schliesst an den Kopf 41 an und verläuft zu einem Teil in der Durchgangsbohrung 41 des Abutments und zu einem weiteren Teil in der Aufnahmeöffnung 31 des Implantats 3. Die an den ersten Zylinderabschnitt 43 anschliessenden zweiten und dritten Zylinderabschnitte 44, 45 verlaufen in der gezeigten Ausführungsform nur in der Aufnahmeöffnung 31. In der dargestellten Ausführungsform ist der ersten Zylinderabschnitt 43 mit einer Übermasspassung ausgeführt und der Durchmesser des ersten Zylinderabschnitts, welcher in der Aufnahmeöffnung 31 verläuft, ist um mindestens 0.02 mm grösser als der korrespondierende Abschnitt 32 der Aufnahmeöffnung 31 des Implantats. Am Übergang zwischen dem ersten Zylinderabschnitt 43 zum zweiten Zylinderabschnitt 44 weist der Bolzen eine zweite umlaufende Schulter 47 auf, welche auf einem in der Aufnahmeöffnung 31 innenliegenden Vorsprung aufliegt. Bedingt durch den grösseren Durchmesser des ersten Zylinderabschnitts 43 zur Aufnahmeöffnung 31, unter anderem im im Auflagebereich zwischen Schulter 47 und dem innenliegenden Vorsprung, wird Presssitz gebildet. Die Aufnahmeöffnung des Implantats ist dadurch in proximaler Richtung, unterhalb der Schulter 47 und dem innenliegenden Vorsprung gegen das Eindringen von Bakterien abgedichtet. Der zweite Zylinderabschnitt 44 weist an seiner Mantelfläche ein umlaufendes Aussengewinde 48 auf, welches mit einem Innengewinde 33 angeordnet in der Aufnahmeöffnung korrespondiert. Zwischen dem zweiten Zylinderabschnitt 44 und dem korrespondierenden Innengwinde 33 sowie dem dritten Zylinderabschnitt 45 und dem korrespondierenden Abschnitt der Aufnahmeöffnung liegt eine Spielpassung, sprich ein Passsitz vor. Anders ausgedrückt, das Kleinstmass des Kerndurchmesser des Innengewindes 33 ist immer grösser, im Grenzfall gleich gross als das Grösstmass des Durchmessers des zweiten Zylinderabschnitts 44. Vergleichbares gilt für den dritten Zylinderabschnitt 45. Das Kleinstmass des Durchmessers der Aufnahmeöffnung des Implantats welche mit dem dritten Zylinderabschnitt 45 korrespondiert ist immer grösser, im Grenzfall gleich gross, als das Grösstmass des Durchmessers des dritten Zylinderabschnitts 45.

In der in Figur 1(b) dargestellten Ausführungsform schliesst an den zweiten Zylinderabschnitt 44 ein dritter Zylinderabschnitt 45 an.

In der in Figur 1 (b) dargestellten Ausführungsform weisen der erste und der dritte Zylinderabschnitt 43, 45 eine glatte Mantelfläche auf. Wie in der Schnittdarstellung der Figur 1(b) gut erkennbar ist, liegt der proximale Rand 23 des Abutments auf dem distalen Rand 34 des Implantats 3 auf. Beim Anziehen des Bolzens 4 wird der proximale Rand gegen den distalen Rand gedrückt. Die beiden Ränder bilden je eine ringförmige Auflagefläche 23, 34, welche axiale Druckkräfte die beim Vorspannen des Bolzens 4 entstehen aufnimmt. Abutment 2 und Implantat 3 sind aus Keramik und der Bolzen 4 ist aus einem faserverstärktem thermoplastischen Material gefertigt. Gemäss der vorliegenden Erfindung, exemplarisch dargestellt in Figur 1(b), nimmt das Keramikimplantat und das Keramikabutment an den ringförmigen Auflageflächen 23, 34 nur Druckkräfte auf, welche beim Anziehen des Bolzens 4 entstehen. Biegekräfte welche durch die Kaubelastung resultieren werden vom Bolzen 4 absorbiert. Die bei den Biegekräften resultierenden Zugkräfte werden vom faserverstärkten thermoplastischen Material aufgenommen und nicht vom keramischen Implantat 3 oder dem Abutment 2. Das Abutment 2 kommt ohne Abutmentstamm aus. Am proximalen Rand des Abutments 2 ist eine Rotationsicherung vorgesehen (in Fig. 1(b) nicht sichtbar).

Eine beispielhafte Ausführungsform einer solchen Rotationssicherung wie sie auch bei der Ausführungsform gemäss Figur 1(b) zum Einsatz kommen kann, ist in Figur 2(a), 2(b) gezeigt. In der erfindungsgemässen Anordnung kann der distalen Rand des Implantats 3, welche die Auflagefläche 34 bildet, entsprechend breit ausgeführt werden.

Figur 2(a) zeigt eine weitere Ausführungsform eines Implantats 5 für das erfindungsgemässe Zahnersatzsystem und Figur 2(b) jene des korrespondierenden Abutments 6. Das Implantat 5 weist eine Aufnahmeöffnung 51 auf, welche dazu dient einen Bolzen, beispielsweise den Bolzen 4 gezeigt in Figur 1(b), aufzunehmen. Am distalen Rand des Implantats 5 ist eine ringförmige Auflagefläche 54 ausbildet. Wie in Figur 2(a) ersichtlich wird die ringförmige Auflagefläche 54 durch zweite Formschlussmittel 8 in Form von einzelnen Nuten 81 teilweise unterbrochen. Es bleibt dabei ausreichend Auflagefläche 54 erhalten, um die auf das Abutment wirkenden Druckkräfte in das Implantat einzuleiten. In diese zweiten Formschlussmittel 8, greifen die in Figur 2(b) gezeigten ersten Formschlussmitteln 7 des Abutments 6 ein. Jede der Nuten 81 weist je eine längsseitige Nutenwand 82 und zwei breitseitige Nutenwände 83 auf. Die Nuten 81 verlaufen innenliegend, am distalen Ende des Implantats im Bereich des Implantat-Kragens 55. Die ersten Formschlussmittel 7, ausgebildet als Zapfen 71 sind entsprechend kurz ausgebildet. Ihre Länge überschreitet die Breite des Implantat-Kragens 55 nicht. Die Zapfen 71 weisen je eine längsseitige Zapfenwand 72 und zwei breitseitige Zapfenwände 73 auf.

Wird das Abutment 6 mit dem Implantat 5 verbunden rasten die Zapfen 71 in die Nuten 81 ein. Zwischen den beiden breitseitigen Nutenwänden 83 und den beiden breitseitigen Zapfenwänden 73 resultiert ein Formschluss und das Spiel zwischen den breitseitigen Zapfen und Nutenwänden ist sehr klein, möglichst Null sodass eine rotationsstabile Sicherung des Abutments im Implantat sichergestellt ist. Das Spiel zwischen den längsseitigen Zapfenwänden 72 und den längsseitigen Nutenwänden 82 ist in jedem Fall grösser als das Spiel zwischen den breitseitigen Zapfen und Nutenwänden, d.h. es besteht ein gewünschter Abstand zwischen den genannten Wänden 72 und 82. Das Abutment ist daher, bevor der Bolzen eingeführt wird, relativ zum Implantat gesehen frei kippbar. Der Abstand zwischen den Wänden 72 und 82 und somit eine gewisse Kippbarkeit, bleibt auch erhalten, wenn der Bolzen eingesetzt und das Zahnersatzsystem fix im Kiefer des Patienten montiert ist. Bei einer Biegebelastung wirken keine Zugspannungen auf das Keramikimplantat 5 und das Keramikabutment 6. Wie dargestellt, ist das Abutment 6 mit dem Implantat 5 mit Hilfe des Bolzens 4, welcher durch die Durchgangsbohrung 61 eingeführt ist, verbunden. Eine an den Bolzen 4 angelegte Vorspannkraft drückt die Auflagefläche 63 gegen die Auflagefläche 54. Die beiden Keramikteile sind auf Druck belastet. Eine Zugbelastung wie sie neben der Druckbelastung bei einer Biegebelastung auftritt wird nicht von den Keramikteilen aufgenommen sondern vom Bolzen 4 (in Figur 2(a), 2(b) nicht sichtbar).

In der in Figur 1 (b) und Figur 2(a), (b) dargestellten Ausführungsform ist die Auflagefläche 34, 54 am distalen Ende des Implantats als Flachkonus und die Auflagefläche 23, 63 als formschlüssiges Gegenstück und daher ebenfalls flachkonisch ausgebildet.

In einer weiteren nicht dargestellten Ausführungsform des erfindungsgemässen Zahnersatzsystems sind die Auflageflächen am distalen Ende des Implantats und am proximalen Ende des Abutments flach, als in der Horizontalen verlaufend ausgebildet.

Figur 3(a) zeigt eine Schnittdarstellung des Zahnersatzsystems 1 aus Figur 1 umfassend das Implantat 3 und das Abutment 2. Im Detail soll hier der Winkel W2 der Auflagefläche 23 angeordnet am proximalen Rand des Abutments 2 und der Winkel W3 der Auflagefläche 34 angeordnet am distalen Rand des Implantats 3 dargestellt werden. In der Figur 3(a) nicht sichtbar, sind an den Auflageflächen 23 und 34 angeordnete erste und zweite Formschlussmittel, beispielsweise in Form der unter Figur 2 dargestellten Zapfen und Nuten. Die Winkel W2 und W3 weisen in Figur 3(a) einen Wert von 150° auf.

Figur 3(b) zeigt eine weitere Ausführungsform einer am proximalen Rand eines Abutments 9 angeordneten Auflagefläche 93 und von einer am distalen Rand eines Implantats 10 angeordneten Auflagefläche 14. Das Abutment 9 sowie das Implantat 10 weisen erste Formschlussmittel 92 und zweite Formschlussmittel 13 auf. Die Auflagefläche 93 ist korrespondierend zur Auflagefläche 14 ausgestaltet. Beide Auflageflächen sind verglichen mit der flachkonischen Form aus Figur 3(a) abgerundet ausgestaltet und weisen den gleichen Radius "R" auf. Ist das Abutment 9 auf dem Implantat 10 aufgesetzt und noch nicht mit dem Bolzen fixiert (Bolzen in Figur 3 nicht dargestellt) ist es aufgrund der ersten und zweiten Formschlussmittel 92, 13 rotationsstabil kann aber relativ zum Implantat 10 gekippt werden.

In Figur 4 ist eine Ausführungsform eines Abutments 6', wie es beim erfindungsgemässen Zahnersatzsystem zum Einsatz kommt in einer Schnittdarstellung gezeigt. Das Implantat ist nicht dargestellt. Das Abutment 6' weist eine Durchgangsbohrung 61' mit einer Innenwand 66 auf. In der in Fig. 4 gezeigten Ausführungsform befindet sich das Abutment 6' mit dem eingesetzten Bolzen 50 in einer sogenannten Vormontageposition. In dieser Position steht ein Teil des Bolzen 50 in proximaler Richtung gesehen aus der Durchgangsbohrung 61' hervor. Mit Hilfe des hervorstehenden Teil des Bolzens, wird das Abutment 6' im Implantat gehalten und zentriert (Implantat in Figur 4 nicht dargestellt), bis der Zahnarzt dieses endgültig fixiert. Beim Festziehen des Bolzens 50 zur endgültigen Fixierung im Implantat, verlässt dieser die Vormontageposition, indem der Vorsprung 64 aus der Rille 65 bewegt wird (in Figur 4 nicht sichtbar).

In der dargestellten Vormontageposition, verläuft der erste Zylinderabschnitt 43' in der Durchgangsbohrung 61' und Teile des zweiten Zylinderabschnittes 44' stehen aus der Durchgangsbohrung 61' hervor. An der Innenwand 66 ist eine Ausnehmung angeordnet, beispielsweise eine Rille 65. Am Bolzen 50, vorzugsweise am Kopf 41' ist ein Vorsprung 64 vorgesehen, welcher in der Vormontageposition in die Rille 65 temporär einrastet. Der Vorsprung 64 und die Rille 65 bilden ein Stoppelement, welches den Bolzen temporär in einer Vormontageposition hält.

Figur 4 (b) zeigt eine Detailansicht A dieser Position, wobei der Bolzen 50 am Kopf 41 einen Vorsprung 64 zeigt, welcher in eine Ausnehmung, ausgebildet als Rille 65 eingreift.

### BEZEICHNUNGSLISTE

- 1: Zahnersatzsystem
- 2,6: Abutment
- 21, 61: Durchgangsbohrung
- 22: Vorsprung
- 23, 63: Auflagefläche am proximaler Rand des Abutments
- 3,5: Implantat
- 31, 51: Aufnahmeöffnung
- 32: korrespondierender Abschnitt der Aufnahmeöffnung
- 33: Innengewinde
- 34, 54: distaler Rand des Implantats
- 4: Bolzen
- 40: Stamm
- 41: Kopf
- 42: Schulter
- 43: erster Zylinderabschnitt
- 44: zweiter Zylinderabschnitt
- 45: dritter Zylinderabschnitt
- 46: Ausnehmung
- 47: zweite umlaufende Schulter
- 48: Aussengewinde
- 54: Auflagefläche am distalen Rand des Implantats
- 55: Implantatkragen
- 7: erste Formschlussmittel (Abutment)
- 71: Zapfen
- 72: längsseitige Zapfenwand
- 73: breitseitige Zapfenwand
- 82: längsseitige Nutenwand
- 83: breitseitige Nutenwand
- 8: zweiten Formschlussmittel (Implantat)
- 81: Nuten

## Patentansprüche

1. Zahnersatzsystem (1) aus Keramik umfassend ein Implantat (3) aus Keramik zur Osseointegration in einen Kieferknochen mit einer Aufnahmeöffnung (31) und ein Abutment (2) aus Keramik und einen Bolzen, wobei das Abutment eine Durchgangsbohrung (21) zur Aufnahme des Bolzens (4) aufweist, wobei der Bolzen aus einem faserverstärkten Thermoplasten gefertigt und dazu eingerichtet ist, Abutment (2) und Implantat (3) zu verbinden, und eine Rotationssicherung, wobei die Rotationssicherung durch erste Formschlussmittel (7) angeordnet an einem proximalen Ende des Abutment (2) und zweite Formschlussmittel (8) angeordnet an einem distalen Ende des Implantats (3) gebildet wird, wobei bei einem Eingreifen der ersten Formschlussmittel (7) in die zweiten Formschlussmittel (8), die ersten und zweiten Formschlussmittel (8, 7) beabstandet voneinander angeordnet sind, sodass das Abutment ohne eingesetzten Bolzen (4) relativ zum Implantat kippbar ist
und bei eingesetztem Bolzen (4), der Bolzen in der Durchgangsbohrung (21) des Abutments (2) und der Aufnahmeöffnung (31) des Implantats (3) verläuft, wobei zwischen dem Bolzen (4) und der Aufnahmeöffnung (31) des Implantats (3) eine Übermasspassung vorgesehen ist.

2. Zahnersatzsystem nach Anspruch 1, **dadurch gekennzeichnet, dass** das proximale Ende des Abutments (2) und das distale Ende des Implantats (3) je eine Auflagefläche (63, 54, 23, 34) aufweisen, die ersten und zweiten Formschlussmittel (8,7) an den Auflageflächen (63, 54, 23, 34) angeordnet sind und beim Eingreifen der ersten Formschlussmittel (7) in die zweiten Formschlussmittel (8) die Auflageflächen (63, 54,23, 34) einander berühren, vorzugsweise dass die beiden Auflageflächen (63, 54, 23, 34) flachkonisch, in einem gleichen Winkel (W2, W3) geneigt ausgebildet sind.

3. Zahnersatzsystem nach Anspruch 2, **dadurch gekennzeichnet, dass** die beiden Auflageflächen (63, 54, 23, 34) im Berührungsbereich abgerundet ausgestaltet sind, wobei der Rundungsradius der beiden Auflageflächen (63, 54, 23, 34) den gleichen Wert aufweist.

4. Zahnersatzsystem nach einem der vorangegangenen Ansprüche, **dadurch gekennzeichnet, dass** der Bolzen (4) wenigsten einen ersten (43) und in proximaler Richtung gesehen einen an den ersten Zylinderabschnitt anschliessenden zweiten Zylinderabschnitt (44) aufweist, wobei der Durchmesser des ersten Zylinderabschnitts (43) grösser ist als der Durchmesser der Aufnahmeöffnung des Implantats, sodass zwischen dem ersten Zylinderabschnitt (43) und der Aufnahmeöffnung (31) des Implantats (3) ein Presssitz resultiert.

5. Zahnersatzsystem nach Anspruch 4, **dadurch gekennzeichnet, dass** am Übergang zwischen dem ersten und dem zweiten Zylinderabschnitt (44) eine umlaufende Schulter (42) vorgesehen ist, welche auf einem in der Aufnahmeöffnung (31) des Implantats angeordneten umlaufenden Vorsprung (22) aufliegt, wobei ein Presssitz zwischen der Schulter (42) und dem umlaufenden Vorsprung (22) resultiert.

6. Zahnersatzsystem nach einem der vorangegangenen Ansprüche 4 oder 5, **dadurch gekennzeichnet, dass** der zweite Zylinderabschnitt (44) an seiner Mantelfläche ein Aussengewinde (48) aufweist, welches mit einem in der Aufnahmeöffnung (31) angeordneten Innengewinde (33) korrespondiert, wobei der Kerndurchmesser des Aussengewindes (48) kleiner oder gleich gross ist wie der Kerndurchmesser des Innengewindes (33).

7. Zahnersatzsystem nach einem der vorangegangenen Ansprüche 4 bis 6, **dadurch gekennzeichnet, dass** an den zweiten Zylinderabschnitt (44) ein weiterer, dritter Zylinderabschnitt (45) anschliesst, wobei der Durchmesser des dritten Zylinderabschnitts kleiner oder gleich gross ist als der Durchmesser der Aufnahmeöffnung (31) des Implantats (3).

8. Zahnersatzsystem nach einem der vorangegangenen Ansprüche 2 bis 7, **dadurch gekennzeichnet, dass** die ersten Formschlussmittel (7) eine Mehrzahl von Zapfen (71) umfassen, welche an der Auflagefläche (23, 63) des Abutments (2, 6) vorspringen und mit den zweiten Formschlussmitteln (8) einer Mehrzahl an Nuten (81) angeordnet an der Auflagefläche (54) des Implantats (3) korrespondieren.

9. Zahnersatzsystem nach einem der vorangegangenen Ansprüche 2 bis 7, **dadurch gekennzeichnet, dass** die ersten Formschlussmittel (7) eine Mehrzahl von Nuten (81) umfassen, welche an der Auflagefläche (23, 63) des Abutments (2,6) angeordnet sind und mit den zweiten Formschlussmitteln (8), einer Mehrzahl von Zapfen (71), welche an der Auflagefläche (23, 63) des Implantats (3) vorspringen korrespondieren.

10. Zahnersatzsystem nach Anspruch 8 oder 9, **dadurch gekennzeichnet, dass** die Zapfen (71) längsseitige und breitseitige Zapfenwände (73, 72), vorzugsweise eine längsseitige Zapfenwand (72) und zwei breitseitige Zapfenwände (73) und die Nuten breitseitige und längsseitige Nutenwände (82, 83), vorzugsweise eine längsseitige (82) und zwei breitseitige Nutenwände (83) aufweisen, wobei beim Eingreifen der ersten Formschlussmittel (7) in die zweiten Formschlussmittel (8) die längsseitige Zapfenwand (72) und die längsseitige Nutenwand (82) beabstandet voneinander angeordnet sind und dieser Abstand grösser ist als der Abstand zwischen den breitseitigen Zapfenwänden (73) und den breitseitigen Nutenwänden (83),sodass das Abutment (2) im Implantat (3) rotationsstabil positionierbar und relativ zum Implantat (3) kippbar ist.

11. Zahnersatzsystem nach einem der vorangegangenen Ansprüche 8 bis 10, **dadurch gekennzeichnet, dass** die Anzahl der Zapfen (71) kleiner ist als die Anzahl der Nuten (81), vorzugsweise zwei Zapfen (71) mit vier Nuten (81), oder zwei Zapfen (71) mit sechs Nuten (81) oder drei Zapfen (71) mit sechs Nuten (81), eine formschlüssige Verbindung bilden.

12. Zahnersatzsystem nach einem der vorangegangenen Ansprüche, **dadurch gekennzeichnet, dass** der faserverstärkte Thermoplast Verstärkungsfasern, ausgewählt aus einer Gruppe bestehend aus: Kohlefaser, Aramidfaser, Glasfaser, Carbon Nano Tubes oder Kombinationen daraus, aufweist, wobei der faserverstärkte Thermoplast aus unidirektionalen Kohlefasern in einer PEEK-Matrix besteht

13. Zahnersatzsystem nach einem der vorangegangenen Ansprüche 1 bis 12, **dadurch gekennzeichnet, dass** am Bolzen (50) und/oder an einer Innenwand (66) der Durchgangsbohrung (21) des Abutments (6') ein Stoppelement (64, 65) angeordnet ist, und der Bolzen (50) in einer Vormontageposition, temporär im Stoppelement (64, 65) einrastet.

14. Zahnersatzsystem nach Anspruch13, **dadurch gekennzeichnet, dass** das Stoppelement (64, 65), als eine Verjüngung der Innenwand (66) der Durchgangsbohrung (21) ausgebildet ist und der Bolzen (50), in der Vormontageposition in der Verjüngung temporär einrastet.

15. Zahnersatzsystem nach Anspruch 13, **dadurch gekennzeichnet, dass** das Stoppelement (64, 65) als eine in der Innenwand (66) angeordnete Ausnehmung, vorzugsweise als eine in der Innenwand (66) umlaufende Rille (64) ausgebildet ist und der Bolzen (50) einen Vorsprung (65) aufweist, welcher in der Vormontage-position temporär in die Ausnehmung einrastet.

16. Zahnersatzsystem nach einem der vorangegangenen Ansprüche 13 bis 15, **dadurch gekennzeichnet, dass** in der Vormontageposition der erste Zylinderabschnitt (43') des Bolzens (4) über seine gesamte Länge in der Durchgangsbohrung (21) des Abutments (2) verläuft und der zweite Zylinderabschnitt (44') aus der Durchgangsbohrung vorsteht.

## Claims

1. Dental prosthesis system (1) made of ceramic, comprising an implant (3) made of ceramic for osseointegration in a jaw bone and having a receiving opening (31), and an abutment (2) made of ceramic and a bolt, the abutment having a through-bore (21) for receiving the bolt (4), the bolt being produced from a fibre-reinforced thermoplastic and being configured to connect abutment (2) and implant (3), and an anti-rotation arrangement, the anti-rotation arrangement being formed by first form-fit means (7) arranged at a proximal end of the abutment (2) and second form-fit means (8) arranged at a distal end of the implant (3), wherein, when the first form-fit means (7) engage in the second form-fit means (8), the first and second form-fit means (8, 7) are arranged at a distance from each other, such that the abutment, without an inserted bolt (4), is tiltable relative to the implant, and, with the bolt (4) inserted, the bolt extends in the through-bore (21) of the abutment (2) and the receiving opening (31) of the implant (3), an oversize fit being provided between the bolt (4) and the receiving opening (31) of the implant (3).

2. Dental prosthesis system according to Claim 1, **characterized in that** the proximal end of the abutment (2) and the distal end of the implant (3) each have a bearing surface (63, 54, 23, 34), the first and second form-fit means (8, 7) are arranged at the bearing surfaces (63, 54, 23, 34), and the bearing surfaces (63, 54, 23, 34) touch each other when the first form-fit means (7) engage in the second form-fit means (8), preferably **in that** the two bearing surfaces (63, 54, 23, 34) have a flat cone design, inclined at a uniform angle (W2, W3).

3. Dental prosthesis system according to Claim 2, **characterized in that** the two bearing surfaces (63, 54, 23, 34) have a rounded design in the contact region, wherein the radius of the rounding of the two bearing surfaces (63, 54, 23, 34) has the same value.

4. Dental prosthesis system according to one of the preceding claims, **characterized in that** the bolt (4) has at least a first cylinder portion (43) and, seen in the proximal direction, a second cylinder portion (44) adjoining a first cylinder portion, wherein the diameter of the first cylinder portion (43) is greater than the diameter of the receiving opening of the implant, such that an interference fit results between the first cylinder portion (43) and the receiving opening (31) of the implant (3).

5. Dental prosthesis system according to Claim 4, **characterized in that**, at the transition between the first and the second cylinder portion (44), a circumferential shoulder (42) is provided which bears on a circumferential protrusion (22) arranged in the receiving opening (31) of the implant, wherein an interference fit results between the shoulder (42) and the circumferential protrusion (22) .

6. Dental prosthesis system according to either of the preceding Claims 4 and 5, **characterized in that** the second cylinder portion (44) has, on its jacket surface, an outer thread (48) which corresponds to an inner thread (33) arranged in the receiving opening (31), wherein the core diameter of the outer thread (48) is smaller than or the same as the core diameter of the inner thread (33).

7. Dental prosthesis system according to one of the preceding Claims 4 to 6, **characterized in that** the second cylinder portion (44) is adjoined by a further, third cylinder portion (45), wherein the diameter of the third cylinder portion is smaller than or the same as the diameter of the receiving opening (31) of the implant (3).

8. Dental prosthesis system according to one of the preceding Claims 2 to 7, **characterized in that** the first form-fit means (7) comprise a plurality of tabs (71) which protrude at the bearing surface (23, 63) of the abutment (2, 6) and correspond to the second form-fit means (8) of a plurality of grooves (81) arranged on the bearing surface (54) of the implant (3).

9. Dental prosthesis system according to one of the preceding Claims 2 to 7, **characterized in that** the first form-fit means (7) comprise a plurality of grooves (81) which are arranged on the bearing surface (23, 63) of the abutment (2, 6) and correspond to the second form-fit means (8) of a plurality of tabs (71) which project from the bearing surface (23, 63) of the implant (3).

10. Dental prosthesis system according to Claim 8 or 9, **characterized in that** the tabs (71) have lengthwise and widthwise tab walls (73, 72), preferably one lengthwise tab wall (72) and two widthwise tab walls (73), and the grooves have widthwise and lengthwise groove walls (82, 83), preferably one lengthwise groove wall (82) and two widthwise groove walls (83), wherein, when the first form-fit means (7) engage in the second form-fit means (8), the lengthwise tab wall (72) and the lengthwise groove wall (82) are arranged at a distance from each other, and this distance is greater than the distance between the widthwise tab walls (73) and the widthwise groove walls (83), such that the abutment (2) can be positioned in a rotationally stable manner in the implant (3) and is tiltable relative to the implant (3).

11. Dental prosthesis system according to one of the preceding Claims 8 to 10, **characterized in that** the number of tabs (71) is smaller than the number of grooves (81), preferably two tabs (71) with four grooves (81), or two tabs (71) with six grooves (81), or three tabs (71) with six grooves (81) forming a form-fit connection.

12. Dental prosthesis system according to one of the preceding claims, **characterized in that** the fibre-reinforced thermoplastic has reinforcement fibres chosen from a group consisting of: carbon fibre, aramid fibre, glass fibre, carbon nanotubes, or combinations thereof, the fibre-reinforced thermoplastic being composed of unidirectional carbon fibres in a PEEK matrix.

13. Dental prosthesis system according to one of the preceding Claims 1 to 12, **characterized in that** a stop element (64, 65) is arranged on the bolt (50) and/or on an inner wall (66) of the through-bore (21) of the abutment (6'), and the bolt (50) latches temporarily in the stop element (64, 65) in a pre-assembly position.

14. Dental prosthesis system according to Claim 13, **characterized in that** the stop element (64, 65) is configured as a narrowing of the inner wall (66) of the through-bore (21), and the bolt (50), in the pre-assembly position, latches temporarily in the narrowing.

15. Dental prosthesis system according to Claim 13, **characterized in that** the stop element (64, 65) is configured as a recess arranged in the inner wall (66), preferably as a circumferential furrow (64) in the inner wall (66), and the bolt (50) has a protrusion (65) which latches temporarily in the recess in the pre-assembly position.

16. Dental prosthesis according to one of the preceding Claims 13 to 15, **characterized in that**, in the pre-assembly position, the first cylinder portion (43') of the bolt (4) extends over its entire length in the through-bore (21) of the abutment (2), and the second cylinder portion (44') protrudes from the through-bore.

## Revendications

1. Système de prothèse dentaire (1) en céramique, comprenant un implant (3) en céramique pour l'ostéo-intégration dans un os maxillaire avec une ouverture de réception (31) et un pilier (2) en céramique et un boulon, le pilier présentant un alésage traversant (21) pour recevoir le boulon (4), le boulon étant fabriqué à partir d'un plastique thermoplastique renforcé par des fibres et étant conçu pour raccorder le pilier (2) et l'implant (3), et un verrouillage antirotation, le verrouillage antirotation étant formée par des premiers moyens d'engagement par correspondance de formes (7) disposés au niveau d'une extrémité proximale du pilier (2) et par des deuxièmes moyens d'engagement par correspondance de formes (8) disposés au niveau d'une extrémité distale de l'implant (3), les premiers et deuxièmes moyens d'engagement par correspondance de formes (8, 7) étant disposés à distance les uns des autres lors d'un engagement des premiers moyens d'engagement par correspondance de formes (7) dans les deuxièmes moyens d'engagement par correspondance de formes (8), de telle sorte que le pilier puisse être basculé par rapport à l'implant sans que le boulon (4) ne soit inséré, et lorsque le boulon (4) est inséré, le boulon s'étendant dans l'alésage traversant (21) du pilier (2) et dans l'ouverture de réception (31) de l'implant (3), un ajustement avec surdimensionnement étant prévu entre le boulon (4) et l'ouverture de réception (31) de l'implant (3).

2. Système de prothèse dentaire selon la revendication 1, **caractérisé en ce que** l'extrémité proximale du pilier (2) et l'extrémité distale de l'implant (3) présentent chacune une surface d'appui (63, 54, 23, 34), les premiers et deuxièmes moyens d'engagement par correspondance de formes (8, 7) sont disposés sur les surfaces d'appui (63, 54, 23, 34) et lors de l'engagement des premiers moyens d'engagement par correspondance de formes (7) dans les deuxièmes moyens d'engagement par correspondance de formes (8), les surfaces d'appui (63, 54, 23, 34) viennent en contact les unes avec les autres, de préférence **en ce que** les deux surfaces d'appui (63, 54, 23, 34) sont réalisées sous forme conique plate, de manière inclinée suivant un angle identique (W2, W3).

3. Système de prothèse dentaire selon la revendication 2, **caractérisé en ce que** les deux surfaces d'appui (63, 54, 23, 34) sont réalisées sous forme arrondie dans la région de contact, le rayon de l'arrondi des deux surfaces d'appui (63, 54, 23, 34) présentant la même valeur.

4. Système de prothèse dentaire selon l'une quelconque des revendications précédentes, **caractérisé en ce que** le boulon (4) présente au moins une première portion cylindrique (43), et, vu dans la direction proximale, une deuxième portion cylindrique (44) se raccordant à une première portion cylindrique, le diamètre de la première portion cylindrique (43) étant supérieur au diamètre de l'ouverture de réception de l'implant, de telle sorte qu'entre la première portion cylindrique (43) et l'ouverture de réception (31) de l'implant (3) soit formé un ajustement serré.

5. Système de prothèse dentaire selon la revendication 4, **caractérisé en ce qu'**au niveau de la transition entre la première et la deuxième portion cylindrique (44) est prévu un épaulement périphérique (42) qui repose sur une saillie périphérique (22) disposée dans l'ouverture de réception (31) de l'implant, un ajustement serré étant formé entre l'épaulement (42) et la saillie périphérique (22).

6. Système de prothèse dentaire selon l'une quelconque des revendications précédentes 4 et 5, **caractérisé en ce que** la deuxième portion cylindrique (44) présente au niveau de sa surface d'enveloppe un filetage extérieur (48) qui correspond à un filetage intérieur (33) disposé dans l'ouverture de réception (31), le diamètre de cœur du filetage extérieur (48) étant inférieur ou égal au diamètre de cœur du filetage intérieur (33).

7. Système de prothèse dentaire selon l'une quelconque des revendications précédentes 4 à 6, **caractérisé en ce qu'**au niveau de la deuxième portion cylindrique (44) se raccorde une troisième portion cylindrique supplémentaire (45), le diamètre de la troisième portion cylindrique étant inférieur ou égal au diamètre de l'ouverture de réception (31) de l'implant (3).

8. Système de prothèse dentaire selon l'une quelconque des revendications précédentes 2 à 7, **caractérisé en ce que** les premiers moyens d'engagement par correspondance de formes (7) comprennent une pluralité de tourillons (71) qui font saillie au niveau de la surface d'appui (23, 63) du pilier (2, 6) et qui correspondent aux deuxièmes moyens d'engagement par correspondance de formes (8) d'une pluralité de rainures (81) disposées au niveau de la surface d'appui (54) de l'implant (3).

9. Système de prothèse dentaire selon l'une quelconque des revendications précédentes 2 à 7, **caractérisé en ce que** les premiers moyens d'engagement par correspondance de formes (7) comprennent une pluralité de rainures (81) qui sont disposées au niveau de la surface d'appui (23, 63) du pilier (2, 6) et qui correspondent aux deuxièmes moyens d'engagement par correspondance de formes (8) d'une pluralité de tourillons (71) qui font saillie au niveau de la surface d'appui (23, 63) de l'implant (3) .

10. Système de prothèse dentaire selon la revendication 8 ou 9, **caractérisé en ce que** les tourillons (71) présentent des parois de tourillons dans le sens de la longueur et dans le sens de la largeur (73, 72), de préférence une paroi de tourillon dans le sens de la longueur (72) et deux parois de tourillons dans le sens de la largeur (73), et les rainures présentent des parois de rainure dans le sens de la largeur et dans le sens de la longueur (82, 83), de préférence une paroi de rainure dans le sens de la longueur (82) et deux parois de rainure dans le sens de la largeur (83), la paroi de tourillon dans le sens de la longueur (72) et la paroi de rainure dans le sens de la longueur (82) étant disposées à distance l'une de l'autre lors de l'engagement des premiers moyens d'engagement par correspondance de formes (7) dans les deuxièmes moyens d'engagement par correspondance de formes (8) et cette distance étant supérieure à la distance entre les parois de tourillon dans le sens de la largeur (73) et les parois de rainure dans le sens de la largeur (83), de telle sorte que le pilier (2) puisse être positionné de manière stable en rotation dans l'implant (3) et puisse basculer par rapport à l'implant (3).

11. Système de prothèse dentaire selon l'une quelconque des revendications précédentes 8 à 10, **caractérisé en ce que** le nombre de tourillons (71) est inférieur au nombre de rainures (81), de préférence deux tourillons (71) forment avec quatre rainures (81), ou deux tourillons (71) forment avec six rainures (81), ou trois tourillons (71) forment avec six rainures (81), une connexion par engagement par correspondance de formes.

12. Système de prothèse dentaire selon l'une quelconque des revendications précédentes, **caractérisé en ce que** le plastique thermoplastique renforcé par des fibres présente des fibres de renforcement choisies parmi un groupe constitué : de fibres de carbone, de fibres d'aramide, de fibres de verre, de nanotubes de carbone ou de combinaisons de ceux-ci, le plastique thermoplastique renforcé par des fibres se composant de fibres de carbone unidirectionnelles dans une matrice en PEEK.

13. Système de prothèse dentaire selon l'une quelconque des revendications précédentes 1 à 12, **caractérisé en ce qu'**un élément de butée (64, 65) est disposé au niveau du boulon (50) et/ou au niveau d'une paroi intérieure (66) de l'alésage traversant (21) du pilier (6'), et le boulon (50), dans une position de prémontage, s'encliquète temporairement dans l'élément de butée (64, 65).

14. Système de prothèse dentaire selon la revendication 13, **caractérisé en ce que** l'élément de butée (64, 65) est réalisé sous forme de rétrécissement de la paroi intérieure (66) de l'alésage traversant (21) et le boulon (50), dans la position de prémontage, s'encliquète temporairement dans le rétrécissement.

15. Système de prothèse dentaire selon la revendication 13, **caractérisé en ce que** l'élément de butée (64, 65) est réalisé sous forme d'évidement disposé dans la paroi intérieure (66), de préférence sous forme de gorge (64) s'étendant sur la périphérie dans la paroi intérieure (66), et le boulon (50) présente une saillie (65) qui, dans la position de prémontage, s'encliquète temporairement dans l'évidement.

16. Prothèse dentaire selon l'une quelconque des revendications précédentes 13 à 15, **caractérisée en ce que** dans la position de prémontage, la première portion cylindrique (43') du boulon (4) s'étend sur toute sa longueur dans l'alésage traversant (21) du pilier (2) et la deuxième portion cylindrique (44') fait saillie hors de l'alésage traversant.
